# EUROPEAN PATENT APPLICATION

(11) **EP 3 531 189 A1**
(43) Date of publication of application: **28.08.2019**
(21) Application number: 17862931.7
(22) Date of filing: 20.10.2017
(51) Int. Cl.: G02B 27/18, G02B 26/10, G02B 27/01, G02B 27/48, G02F 1/17, G03B 21/62, H04N 5/74

(54) **DISPLAY DEVICE**

(30) Priority: 20.10.2016 JP 2016206161
(71) Applicant: Dai Nippon Printing Co., Ltd., Tokyo 162-8001 (JP)
(72) Inventor: KURASHIGE Makio, Tokyo 162-8001 (JP); KUBOTA Shogo, Tokyo 162-8001 (JP); ISHIDA Kazutoshi, Tokyo 162-8001 (JP); NAKATSUGAWA Kaori, Tokyo 162-8001 (JP)
(74) Representative: Müller-Boré & Partner Patentanwälte PartG mbB
(86) International application number: PCT/JP2017/038074
(87) International publication number: WO 2018/074602

(57) **Abstract**

To provide a display device that makes speckles on a screen difficult to be visually recognized and allows an observer to easily observe an image projected on the screen easily.

A display device 10 includes a projector 20 that emits coherent light, a screen 40 that projects the coherent light emitted from the projector, and a first optical system 1 that guides transmitted light or diffused light of the screen to an observing direction of an observer, and allows an observer to observe a real image or a virtual image of an image projected on the screen. The screen includes a plurality of particles including a first portion and a second portion, a particle layer having a plurality of particles, electrodes for applying a voltage to the particle layer to generate an electric field for driving the particles of the particle layer.

## Description

### Technical Field

The present disclosure relates to a display device including a projector and a screen.

### Background Art

A projector using a coherent light source has been widely used (see Patent Literature 1: WO 2012/033174 A, Patent Literature 2: JP 2008-310260 A). Typically, laser light oscillated from a laser light source is used as coherent light. When image light from a projector is formed by coherent light, speckles are observed on a screen irradiated with the image light. The speckles are recognized as a spot pattern and degrades the display image quality. In Patent Literature 1, for the purpose of reducing speckle, an incident angle of image light incident on each position on a screen is changed over time. As a result, a scattering pattern without correlation is superimposed on the screen, and speckle can be reduced.

### Summary of Invention

As another method for reducing speckle, it is considered that a screen in which the diffusion characteristic changes over time is also effective. Here, Patent Literature 2 proposes a screen formed by electronic paper. In the screen of Patent Literature 2, the reflectance changes in accordance with an irradiation position of image light irradiated by the raster scan method. In Patent Literature 2, speckle reduction can be realized while a normal projector is used, by changing the diffusion characteristic of the screen over time. Further, it can be said that it is extremely useful in that speckle can be reduced in combination with a projector that cannot employ the technique of the Cited Literature 1 such as a raster scan type projector.

However, the screen disclosed in Patent Literature 2 has a problem that the durability is not sufficient and it is difficult to increase the size. As a result, it has not been widely used as a screen having a speckle reduction function.

In addition, when the screen size and installation location are limited, it is conceivable that it is difficult for an observer to directly observe an image projected on the screen, but Patent Literatures 1 and 2 do not disclose a solution for this point at all.

The present disclosure provides a display device that makes speckles on a screen difficult to be visually recognized and allows an observer to easily observe an image projected on the screen easily.

In order to solve the above problem, the present disclosure provides a display device including:
a projector that emits coherent light;
a screen on which the coherent light emitted from the projector is projected; and
a first optical system that guides transmitted light or diffused light of the screen to an observing direction of an observer and allows an observer to observe a real image or a virtual image of an image projected on the screen,
in which the screen includes
a plurality of particles each including a first portion and a second portion,
a particle layer having the plurality of particles, and
an electrode that generates an electric field for driving the particles of the particle layer when a voltage is applied to the particle layer.

The first optical system may include a half mirror that partially transmits and reflects the transmitted light or the diffused light of the screen, and allows the observer to observe the virtual image of the image projected on the screen.

The first optical system may include a concave mirror that reflects the transmitted light or the diffused light of the screen, and allows the observer to observe the real image of the image projected on the screen.

The screen may be of a transmissive type,
the display device may further include a second optical system arranged at a position between the screen and the first optical system where the coherent light transmitted through the screen from the projector is not directly incident, and
the first optical system may guide the coherent light that has passed through the second optical system to an observing direction of the observer.

The screen may include a light diffusing layer arranged close to the particle layer.

The screen may include a light direction changing member arranged close to a side opposite to a side on which the light diffusing layer of the particle layer is closely arranged to change a traveling direction of incident light.

The screen may include two light diffusing layers arranged on both sides of the particle layer interposed between two light diffusing layers.

The screen may include a light absorbing layer arranged close to the light diffusing layer and absorbing light in a predetermined wavelength range.

The screen may include:
a lens array arranged between the particle layer and the light diffusing layer; and
a black matrix arranged between the lens array and the light diffusing layer.

According to the present disclosure, speckle on a screen is made difficult to be visually recognized and an observer can easily observe an image projected on the screen.

### Brief Description of Drawings

FIG. 1 is a diagram showing a display device 10 according to an embodiment of the present disclosure.
FIG. 2 is a diagram showing an example of projecting coherent light onto a screen 40 by the raster scan method.
FIG. 3 is a cross-sectional view of the screen 40.
FIG. 4 is a view showing an example in which a concave mirror 4 is used as a first optical system 1.
FIG. 5 is a view showing an example in which a second optical system 5 is arranged between the screen 40 and a half mirror 3.
FIG. 6 is a view showing an example in which the second optical system 5 is arranged between the screen 40 and the concave mirror 4.
FIG. 7 is a detailed cross-sectional view of the screen 40.
FIG. 8 is a view showing a situation where a particle rotates.
FIG. 9 is a view showing a situation where a particle rotates.
FIG. 10 is a view showing a situation where a particle rotates.
FIG. 11 is a cross-sectional view of a screen having a particle having a three-layer structure.
FIG. 12 is a view showing a diffusion direction of a particle.
FIG. 13 is a view showing a diffusion direction of a particle.
FIG. 14 is a view showing a diffusion direction of a particle.
FIG. 15 is a view showing an example of a particle in which a first portion is transparent.
FIG. 16 is a view showing an example of a particle having different volume ratios of the first portion and a second portion.
FIG. 17 is a view showing an example of a particle in which one of the first portion and the second portion has a light absorbing function.
FIG. 18 is a view showing an example of a particle in which the volume of the first portion is larger than the volume of the second portion.
FIG. 19 is a view showing a situation where the particle of FIG. 18 rotates.
FIG. 20 is a view showing a situation where the particle of FIG. 18 rotates.
FIG. 21 is a view showing a situation where the particle of FIG. 18 rotates.
FIG. 22 is a view showing a particle in which the volume of the second portion is larger than the volume of the first portion.
FIG. 23 is a view showing a situation where the particle of FIG. 22 rotates.
FIG. 24 is a view showing a situation where the particle of FIG. 22 rotates.
FIG. 25 is a view showing a situation where the particle of FIG. 22 rotates.
FIG. 26 is a cross-sectional view of a reflection screen having a particle having a three-layer structure.
FIG. 27 is a view showing a situation where a particle of FIG. 26 rotates.
FIG. 28 is a view showing a situation where a particle of FIG. 26 rotates.
FIG. 29 is a view showing a situation where a particle of FIG. 26 rotates.
FIG. 30 is a cross-sectional view of a screen in which a first electrode and a second electrode are arranged in a stripe pattern.
FIG. 31 is a view showing an example in which a Fresnel lens layer is arranged on an incident surface side of a transmission screen and a light diffusing layer is arranged on an emission surface side of a screen.
FIG. 32 is a view showing an example in which a light diffusing layer is also arranged between the Fresnel lens layer and the screen, in addition to the configuration of FIG. 31.
FIG. 33 is a view showing an example in which the Fresnel lens layer is omitted from FIG. 32.
FIG. 34 is a view showing an example in which a light absorbing layer is arranged close to a light diffusing layer on the emission surface side of the screen.
FIG. 35 is a view showing an example in which a lens array layer and a black matrix layer are arranged between the emission surface of the screen and the light diffusing layer, in addition to the configuration of FIG. 33.

### Description of Embodiments

An embodiment of the present disclosure will be described below with reference to drawings. Note that, for the convenience of illustration and easiness of understanding, the reduced scale and the aspect ratio, and the like are changed from the actual object and exaggerated in the drawings attached to the specification.

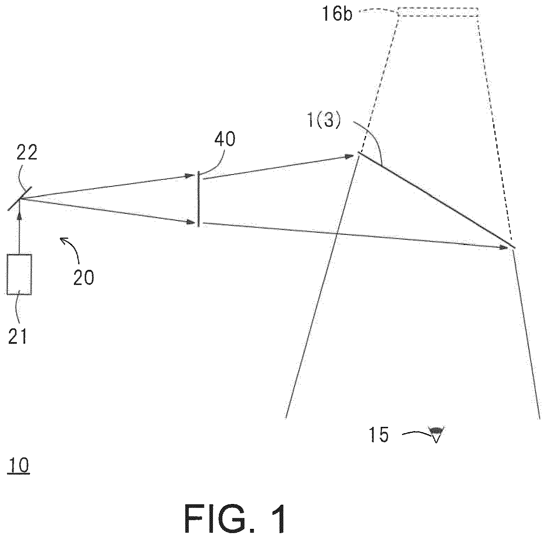

FIG. 1 is a diagram showing a display device 10 according to an embodiment of the present disclosure. The display device 10 of FIG. 1 includes a projector 20 that emits coherent light, a screen 40 that projects the coherent light emitted from the projector 20, and a first optical system 1. As will be described later, the screen 40 can change a diffuse wave front of emission light over time so that speckle can be made inconspicuous.

The projector 20 projects light for forming an image, that is, image light onto the screen 40. In the illustrated example, the projector 20 includes a coherent light source 21 that oscillates coherent light, and a scanning device 22 that adjusts an optical path of the coherent light source 21. As a typical example, the coherent light source 21 is composed of the laser light source 21 that oscillates laser light. The coherent light source 21 may have a plurality of coherent light sources 21 that generate light in different wavelength ranges. The scanning device 22 includes a reflection mirror 23 that is rotatable at least in one axial direction. The coherent light emitted from the coherent light source 21 is incident on the reflection mirror 23 and is reflected. By rotating the reflection mirror 23, the coherent light reflected by the reflection mirror 23 can be scanned on the screen 40.

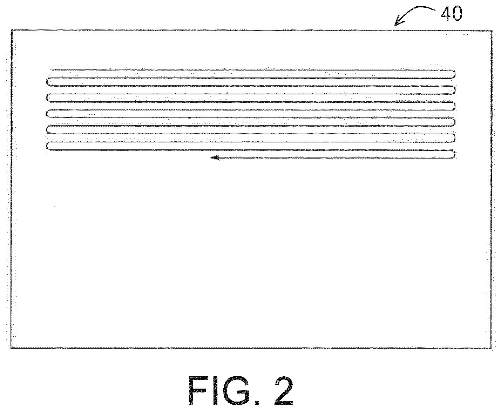

FIG. 2 is a diagram showing an example in which the projector 20 projects coherent light onto the screen 40 by the raster scan method. By rotating the reflection mirror 23 in the projector 20 in the two-dimensional direction, the coherent light reflected by the reflection mirror 23 can be scanned over the entire region on the screen 40. In addition, by increasing the rotation speed of the reflection mirror 23, the scanning speed of the coherent light on the screen 40 can be increased. The reflection mirror 23 may be rotated periodically within a predetermined angle range or may be rotated in a discontinuous angle range so that only a specific position on the screen 40 is irradiated with coherent light. Alternatively, the timing of emitting the coherent light from the coherent light source 21 is adjusted while the reflection mirror 23 is periodically rotated in a predetermined angle range, and therefore, only a specific position on the screen 40 may be irradiated with the coherent light. The projector 20 controls the emission timing of the coherent light and the rotation of the reflection mirror 23 in synchronization with the timing at which the drive circuit 30 applies an AC voltage to the screen 40.

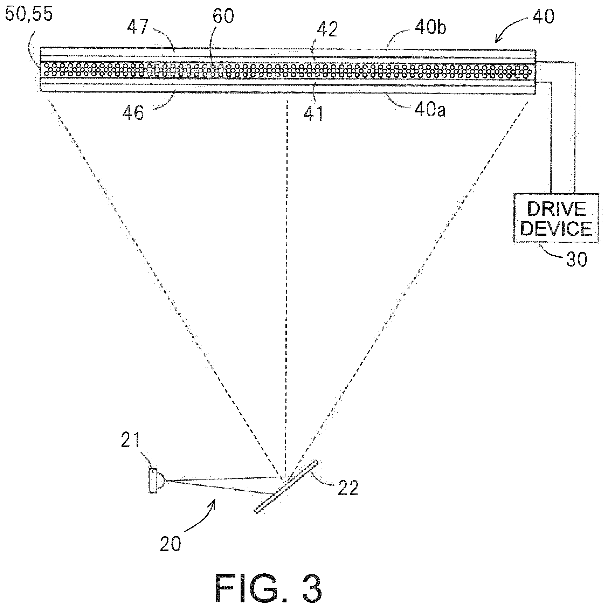

FIG. 3 is a cross-sectional view of the screen 40. The screen 40 includes a plurality of particles 60, a particle layer 55 having a plurality of particles 60, and electrodes 41, 42 for applying a voltage to the particle layer 55 to generate an electric field for driving the particles 60 of the particle layer 55. Although detailed description of the screen 40 will be described later, the drive circuit 30 for applying an AC voltage to the electrodes is connected to the screen 40. The AC voltage applied to the electrodes in the drive circuit 30 is applied to the particle layer 55.

The first optical system 1 shown in FIG. 1 guides the transmitted light or the diffused light of the screen 40 to an observing direction of an observer 15, and allows the observer 15 to observe a real image 16a or a virtual image 16b of the image projected on the screen 40.

The first optical system 1 includes, for example, a half mirror 3. The half mirror 3 partially transmits and reflects the transmitted light or diffused light of the screen 40, and allows the observer 15 to observe the virtual image 16b of the image projected on the screen 40.

The dotted frame in FIG. 1 indicates the virtual image 16b of the image projected on the screen 40. The observer 15 can observe the virtual image 16b which is larger than the image projected on the screen 40. Since the virtual image 16b is arranged in a direction different from that of the screen 40, even when the observer 15 is in a position where the observer 15 cannot directly observe the screen 40, the observer 15 can observe the virtual image 16b of the image projected on the screen 40.

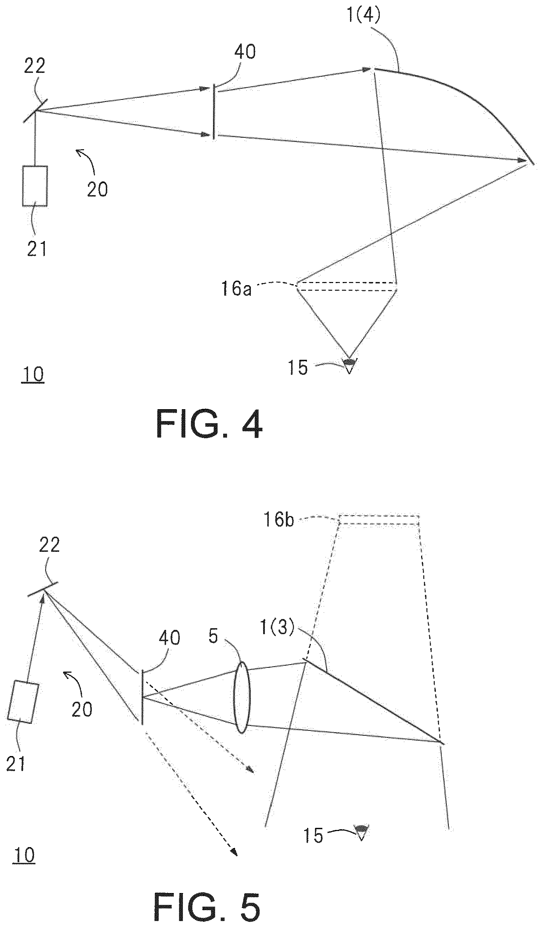

The first optical system 1 may include an optical member other than the half mirror 3. FIG. 4 shows an example in which a concave mirror 4 is used as the first optical system 1. When the concave mirror 4 is used, the observer 15 can observe the real image 16a of the image projected on the screen 40 at the position of the concave mirror 4. Also in this case, it is possible to observe the real image 16a which is larger than the image projected on the screen 40.

In both cases of FIGS. 1 and 4, since the wave front of the coherent light projected on the screen 40 changes with time due to the movement of the particles 60 according to the voltage applied to the particle layer 55, the speckle on the screen 40 is difficult to be visually recognized. Therefore, speckles are difficult to be visually recognized also in the real image 16a or the virtual image 16b observed by the first optical system 1.

Although FIGS. 1 and 4 show an example of using a transmission screen 40, the present embodiment can also be applied to a case of using a reflection screen 40. When the reflection screen 40 is used, the first optical system 1 may be arranged along the reflection direction of the screen 40. In the following description as well, although an example using a transmission screen 40 is shown, it is also possible to use a reflection screen 40 similarly.

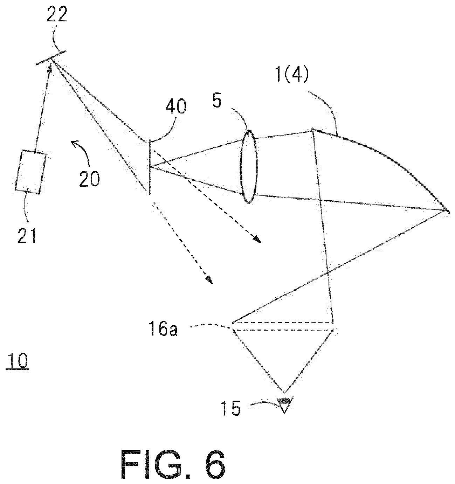

In FIGS. 1 and 4, a second optical system 5 may be arranged between the screen 40 and the first optical system 1. FIG. 5 shows an example in which the second optical system 5 is arranged between the screen 40 and the half mirror 3, and FIG. 6 shows an example in which the second optical system 5 is arranged between the screen 40 and the concave mirror 4. The second optical system 5 is arranged at a position where the coherent light transmitted through the screen 40 from the projector 20 is not directly incident. The reason for arranging the second optical system 5 at such a position is not only safety consideration for preventing the light transmitted through the projector 20 from directly entering the eyes of the observer 15 but also alleviation of the occurrence of a local spot with high brightness due to the direct light or alleviation of emphasis on speckle contrast.

The screen 40 of FIG. 5 is of a transmissive type, and part of the coherent light from the projector 20 transmits as it is and travels along the incident direction, while the remaining coherent light diffuses when transmitting through the screen 40. Most of the diffused light is incident on the second optical system 5. The second optical system 5 refracts the diffusion angle of the coherent light diffused by the screen 40 and guides the light to the first optical system 1.

In the case where a convex lens is used as the second optical system 5, the diffusion angle of the coherent light diffused by the screen 40 becomes gentle by the convex lens. Therefore, among the coherent light diffused by the screen 40, the ratio of the coherent light incident on the first optical system 1 can be increased, and the light utilization efficiency is improved.

In addition, when a concave lens is used as the second optical system 5, the diffusion angle of the coherent light diffused by the screen 40 is increased by the concave lens. Therefore, the enlargement ratio of the real image 16a or the virtual image 16b can be increased.

When the half mirror 3 is used as the first optical system 1, the observer 15 observes the virtual image 16b indicated by the dotted frame in FIG. 5. Since the second optical system 5 is arranged in a direction different from the traveling direction of direct light that has passed through the screen 40 from the projector 20, light does not directly enter the eyes of the observer 15, and the antiglare property is improved.

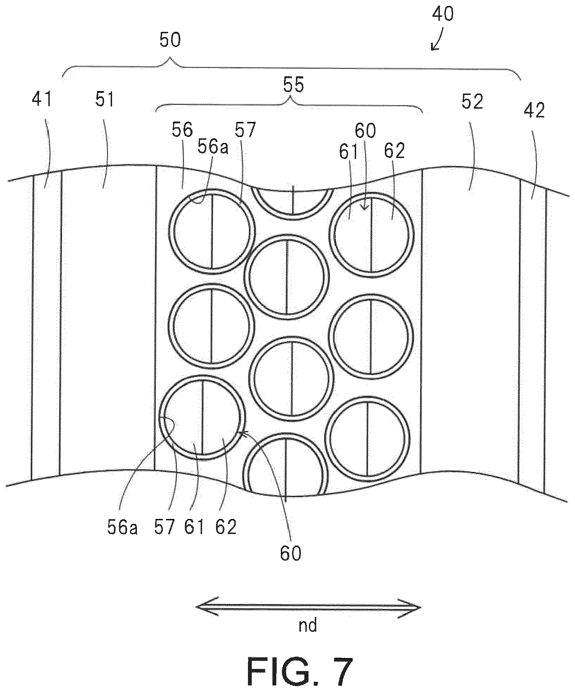

Next, the screen 40 will be described in detail. FIG. 7 is a detailed sectional view of the screen 40. The projector 20 irradiates a display side surface formed by a first cover layer 46 with image light. The image light transmits through the first cover layer 46 and the first electrode 41 of the screen 40, and then, is diffused and reflected on a particle sheet 50. The diffused and reflected image light passes through the second electrode 42 and the second cover layer 47. As a result, the observer 15 positioned facing the display side surface 40b (see FIG. 3) of the screen 40 can observe the image.

The particle sheet 50 includes a pair of substrates 51, 52 and a particle layer 55 provided between the pair of substrates 51, 52. The particle layer 55 is sealed between the first substrate 51 and the second substrate 52. The first substrate 51 and the second substrate 52 are made of a material having a strength capable of sealing the particle layer 55, for example, a polyethylene terephthalate resin film.

The first electrode 41 and the first cover layer 46 through which the image light transmits are transparent. The transmittance of each of the first electrode 41 and the first cover layer 46 in the visible light region is preferably 80% or more, more preferably 84% or more. Note that the visible light transmittance is specified as an average value of transmittance at each wavelength measured within a measurement wavelength range of 380 nm to 780 nm using a spectrophotometer ("UV-3100 PC" manufactured by Shimadzu Corporation, a product conforming to JISK0115).

Indium tin oxide (ITO), indium zinc oxide (InZnO), Ag nanowire, carbon nanotube, or the like can be used as the conductive material forming the first electrode 41. On the other hand, the first cover layer 46 is a layer for protecting the first electrode 41 and the particle sheet 50. The first cover layer 46 can be formed of a transparent resin, for example, polyethylene terephthalate having excellent stability, polycarbonate, cycloolefin polymer, or the like. A glass substrate also can be used.

The second electrode 42 can be configured as similar to the first electrode 41. Further, the second cover layer 47 can be configured as similar to the first cover layer 46. However, it is not necessary for the second electrode 42 to be transparent. Therefore, the second electrode 42 may be formed of a thin metal film such as aluminum or copper, for example. In the case of the transmission screen 40, it is desirable to form the second electrode 42 with a transparent electrode such as ITO. The second cover layer 47 can be configured as similar to the first cover layer 46.

The particle 60 includes a first portion 61 and a second portion 62 having different relative dielectric constants. Therefore, when this particle 60 is placed in an electric field, an electronic dipole moment is generated in the particle 60. At this time, the particle 60 moves to a position where the vector of the dipole moment faces the direction directly opposite to the vector of the electric field. Therefore, when a voltage is applied between the first electrode 41 and the second electrode 42, and an electric field is generated in the particle sheet 50 positioned between the first electrode 41 and the second electrode 42, the particle 60 moves in a cavity 56a so as to take a stable posture toward the electric field, that is, a stable position and orientation with respect to the electric field. The transmission screen 40 changes its diffusion characteristic in accordance with the operation of the particle 60 having a light diffusion function. The first portion 61 and the second portion 62 are transparent. It is preferable that the first portion 61 and the second portion 62 have visible light transmittance similar to that of the above-described first electrode 41 and the like.

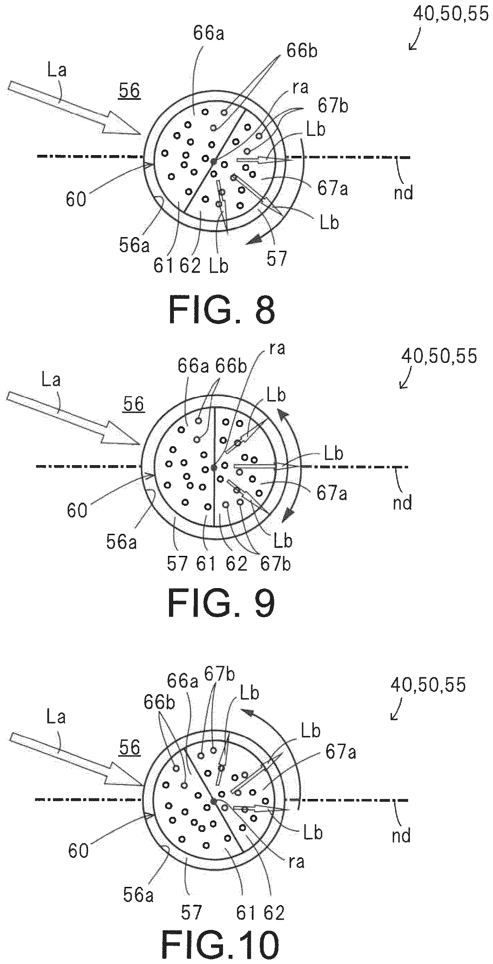

In the case of manufacturing the particle 60 by the microchannel manufacturing method, the speed, the joining direction or the like at the time of joining the two kinds of polymerizable resin components forming the continuous phase, and the speed, ejecting direction or the like at the time of ejecting to the particle 60 phase of the continuous phase is adjusted, so that it is possible to adjust the outer diameter of the particle 60 to be obtained and the shape or the like of the interface between the first portion 61 and the second portion 62 of the particle 60. Note that, in the example of the particle 60 shown in FIGS. 8 to 10, the volume ratio of the first portion 61 and the volume ratio of the second portion 62 are the same. Further, in the example of the particles 60 shown in FIGS. 8 to 10, the interface between the first portion 61 and the second portion 62 is formed in a planar shape. The particle 60 shown in FIGS. 8 to 10 has a spherical shape. That is, in the particle 60 shown in FIGS. 8 to 10, each of the first portion 61 and the second portion 62 is hemispherical.

In addition, when two kinds of polymerizable resin components forming a continuous phase contain a diffusing component, it is possible to impart an internal diffusion function to the first portion 61 and the second portion 62 of the particle 60. In the examples shown in FIGS. 8 to 10, the first portion 61 of the particle 60 includes a first main portion 66a, and a plurality of first diffusing components (diffusion particles 60) 66b dispersed in the first main portion 66a. Similarly, the second portion 62 includes a second main portion 67a, and a plurality of second diffusing components (diffusion particles 60) 67b dispersed in the second main portion 67a. That is, the spherical particles 60 shown in FIGS. 8 to 10 can exhibit a diffusion function with respect to light traveling inside the first portion 61 and light traveling inside the second portion 62. Here, the diffusing components 66b, 67b are components that can exert an action of changing the travel direction of light traveling in the particle 60, by reflection, refraction, scattering or the like. The light diffusing function (light scattering function) of such diffusing components 66b, 67b may be imparted, for example, when a material having a different refractive index from the material forming the main portions 66a, 67a of the particle 60 constitutes the diffusing components 66b, 67b, or when a material that can exert a reflection action on the light constitutes the diffusing components 66b, 67b. As the diffusing components 66b, 67b having a refractive index different from that of the material forming the main portions 66a, 67a, resin beads, glass beads, a metal compound, a porous material containing a gas, and mere bubbles are exemplified. It is preferable that the amounts of the diffusing components 66b, 67b added to the particle 60 be adjusted so that the transmittance of the light incident on the particle 60 is higher than the reflectance of the light incident on the particle 60.

Note that the particle layer 55, the particle sheet 50 and the transmission screen 40 can be prepared as follows, for example.

The particle layer 55 can be manufactured by the manufacturing method disclosed in JP 1-28259 A. That is, first, an ink in which the particle 60 is dispersed in a polymerizable silicone rubber is prepared. Next, this ink is stretched with a coater or the like, and further polymerized by heating or the like to form a sheet. By the above procedure, a holding part 56 holding the particle 60 is obtained. Next, the holding part 56 is immersed in a solvent 57 such as silicone oil for a certain period of time. By the swelling of the holding part 56, a gap filled with the solvent 57 is formed between the holding part 56 made of silicone rubber and the particle 60. As a result, a cavity 56a accommodating the solvent 57 and the particles 60 is defined. In this manner, the particle layer 55 can be manufactured.

Next, according to the manufacturing method disclosed in JP 2011-112792 A, the transmission screen 40 can be prepared using the particle layer 55. First, the particle layer 55 is covered with a pair of substrates 51, 52, and the particle layer 55 is sealed with a laminate, an adhesive, or the like. As a result, the particle sheet 50 is prepared. Next, the first electrode 41 and the second electrode 42 are provided on the particle sheet 50, and the first cover layer 46 and the second cover layer 47 are further laminated to obtain the transmission screen 40.

Next, an action when an image is displayed using this transmission display device 10 will be described.

First, under the control of a controller 35, the coherent light source 21 of the projector 20 oscillates coherent light. The optical path of the light from the projector 20 is adjusted by a scanning device (not shown), and the transmission screen 40 is irradiated with the adjusted light. As shown in FIG. 3, the scanning device (not shown) adjusts the optical path of the light so that the light scans on the display side surface 40a of the transmission screen 40. However, the emission of coherent light by the coherent light source 21 is controlled by the controller 35. The controller 35 stops the emission of the coherent light from the coherent light source 21 corresponding to the image to be displayed on the transmission screen 40. The operation of the scanning device included in the projector 20 is high speed to the extent that it cannot be resolved by human eyes. Therefore, the observer 15 simultaneously observes the light with which each position on the transmission screen 40 that is irradiated at intervals is irradiated.

The light projected on the transmission screen 40 transmits through the first cover layer 46 and the first electrode 41 and reaches the particle sheet 50. The light is diffused by the particle 60 of the particle sheet 50 and transmitted through the particle 60, and is emitted in various directions which are the observer 15 side of the transmission screen 40. Therefore, the transmitted light from each position on the transmission screen 40 can be observed at each position on the observer 15 side of the transmission screen 40. As a result, it is possible to observe the image corresponding to the region irradiated with the coherent light on the transmission screen 40.

In addition, the coherent light source 21 may include a plurality of light sources that emit coherent light in different wavelength ranges. In this case, the controller 35 controls the light sources corresponding to the light in each wavelength range independently from the other light sources. As a result, a color image can be displayed on the transmission screen 40.

Meanwhile, when an image is formed on the screen 40 using coherent light, speckles of spot pattern will be observed. It is considered that one cause of speckles are that coherent light typified by laser light causes an interference pattern on the surface of a photosensor (on the retina in the case of a human) after diffusing on the screen 40. In particular, when the screen 40 is irradiated with coherent light by raster scan, coherent light is incident on each position on the screen 40 from a certain incident direction. Therefore, when raster scan is adopted, the speckle wave front generated at each point of the screen 40 is immovable unless the screen 40 swings, and when the speckle pattern is visually recognized by the observer 15 together with the image, the image quality of the display image is significantly degraded.

On the other hand, in the transmission screen 40 of the transmission display device 10 according to the present embodiment, the diffusion characteristic changes over time. As the diffusion characteristic on the transmission screen 40 changes, the speckle pattern on the transmission screen 40 changes over time. Then, when the change of the diffusion characteristic over time is made sufficiently high, the speckle patterns are overlapped and averaged, and are observed by the observer 15. This makes speckle inconspicuous.

As shown in FIG. 3, the transmission screen 40 according to the present embodiment includes a pair of electrodes 41, 42. The pair of electrodes 41, 42 are electrically connected to the drive circuit 30. The drive circuit 30 can apply a voltage to the pair of electrodes 41, 42. When a voltage is applied between the pair of electrodes 41, 42, an electric field is generated in the particle sheet 50 positioned between the pair of electrodes 41, 42. In the particle layer 55 of the particle sheet 50, the particle 60 having a plurality of portions 61, 62 having different relative dielectric constants is movably held. Since the particle 60 is originally charged, or since a dipole moment is generated when an electric field is generated at least in the particle layer 55, the particle 60 moves in accordance with the vector of the generated electric field. When the particle 60 having the function of changing the traveling direction of light, for example, the diffusion function, moves, as shown in FIGS. 8 to 10, the diffusion characteristic of the transmission screen 40 changes over time. As a result, it is possible to make speckle inconspicuous. In FIGS. 8 to 10, the sign "La" indicates the image light emitted from the projector 20 to the transmission screen 40, and the sign "Lb" indicates the image light diffused by the transmission screen 40.

Note that the relative dielectric constant is different between the first portion 61 and the second portion 62 of the particle 60 is sufficient as long as the relative dielectric constant is different to an extent that a speckle reduction function can be exhibited. Therefore, whether or not the relative dielectric constant differs between the first portion 61 and the second portion 62 of the particle 60 can be determined by whether or not the movably held particle 60 can move with changes in the electric field vector.

Here, the principle that the particle 60 moves with respect to the holding part 56 is that the orientation and position of the particle 60 is changed so that the charge or dipole moment of the particle 60 has a stable positional relationship with respect to the electric field vector. Therefore, when a constant electric field continues to be applied to the particle layer 55, the movement of the particle 60 stops after a certain period of time. On the other hand, in order to make the speckle inconspicuous, it is necessary to continue the movement of the particle 60 with respect to the holding part 56. Therefore, the drive circuit 30 applies a voltage so that the electric field generated in the particle layer 55 changes over time. In the example shown, the drive circuit 30 applies a voltage between the pair of electrodes 41, 42 to invert the vector of the electric field generated in the particle sheet 50. For example, in the example shown in FIG. 7, a voltage of X [V] and a voltage of -Y [V] are repeatedly applied to the pair of electrodes 41, 42 of the transmission screen 40 from the drive circuit 30. With the application of such an inverted electric field, the particle 60 can repeatedly move between the state of FIG. 10 and the state of FIG. 8, while the state of FIG. 9 is the center, as an example. Note that the voltage applied to the first and second electrodes 41, 42 is not limited to that shown in FIG. 7, but may be an alternating voltage or the like, for example.

Note that the particle 60 is accommodated in the cavity 56a formed in the holding part 56. In the examples shown in FIGS. 8 to 10, the particle 60 has a substantially spherical outer shape. In addition, the cavity 56a that accommodates the particle 60 has a substantially spherical inner shape. Therefore, the particle 60 can rotate and oscillate around a rotation axis ra extending in a direction orthogonal to the drawing sheet of FIGS. 8 to 10. However, depending on the size of the cavity 56a that accommodates the particle 60, the particle 60 performs not only repeating rotational motion but also translational motion. The cavity 56a is filled with the solvent 57. The solvent 57 facilitates the movement of the particle 60 with respect to the holding part 56.

In the present embodiment described above, the transmission screen 40 includes: the particle layer 55 having a plurality of particles 60 including the transparent first portion 61 and the transparent second portion 62 having different relative dielectric constants, and a plurality of diffusing components 66b, 67b dispersed in the first portion 61 and the second portion 62; and the electrodes 41, 42 that generate an electric field for driving the particles 60 of the particle layer 55 when a voltage is applied. In the transmission screen 40, when a voltage is applied between the first electrode 41 and the second electrode 42, an electric field is generated in the particle layer 55. At this time, the particle 60 moves in accordance with the generated electric field. When the particle 60 having the function of changing the traveling direction of light, for example, the diffusion function, moves, the diffusion characteristic of the transmission screen 40 changes over time. Therefore, when the transmission screen 40 is irradiated with light, an electric field is generated in the particle layer 55 to move the particle 60, so that speckle can be effectively made inconspicuous. Such a transmission screen 40 can be relatively easily manufactured by using, for example, the above-described manufacturing method. In addition, the transmission screen 40 is also suitable for a large screen 40, is excellent in durability and stability of operation, and is easy to control.

In addition, according to the present embodiment, the first portion 61 and the second portion 62 having different relative dielectric constants are formed to be transparent. Therefore, even if the orientation, posture, and position of the particle 60 change, the color of the transmission screen 40 does not change. Thereby, when an image is displayed, the color of the transmission screen 40 is not perceived as changed. As a result, it is also possible to effectively avoid deterioration of the image quality accompanying the color change of the transmission screen 40. Note that the particle 60 that is movable in an electric field and is transparent can be manufactured by forming the first portion 61 and the second portion 62 with the same type of synthetic resin material, and mixing an additive that imparts charging properties to one of the first portion 61 and the second portion 62. Therefore, the useful particle 60 for the transmission screen 40 can be easily manufactured.

According to the present embodiment, while the transmission screen 40 is irradiated with light, the particle 60 can be repeatedly rotated in the particle layer 55. That is, the particle 60 can move so that the diffusion characteristic can be effectively changed in a very small space. Therefore, by repeatedly rotating the particle 60, it is possible to make the particle layer 55 and the transmission screen 40 thinner while making the speckle effectively inconspicuous.

As described in the above embodiment, the particle 60 can be moved by changing the voltage applied to the pair of electrodes 41, 42. By adjusting the change range of the applied voltage, the center voltage of the applied voltage, or the like, it is possible to control the moving range of the particle 60 and the posture of the particle 60 at the center position within the moving range.

The first portion 61 and the second portion 62 of the particle 60 may be different in volume ratio. That is, the volume ratio of the first portion 61 in the particle 60 may be different from the volume ratio of the second portion 62 in the particle 60.

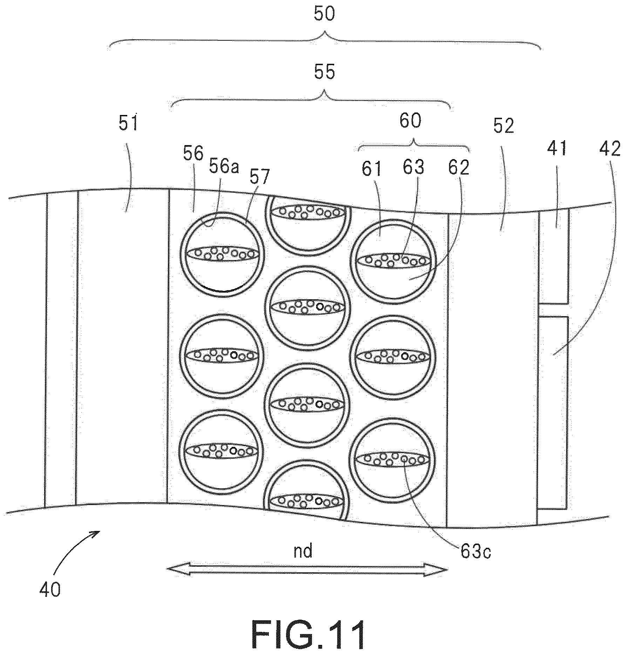

In addition to the first portion 61 and the second portion 62, the particle 60 may have a third portion. FIG. 11 is a cross-sectional view of the screen 40 having the particle 60 including a three-layer structure of the first portion 61, the second portion 62, and a third portion 63. The third portion 63 is in surface contact with the first portion 61 and controls incident light from the first portion 61. The second portion 62 is in surface contact with a second surface 63b opposite to a first surface 63a which is in surface contact with the first portion 61 of the third portion 63 and has a relative dielectric constant different from that of the first portion 61. In this manner, the third portion 63 is sandwiched between the first portion 61 and the second portion 62, and the third portion 63 is in surface contact with the first portion 61 and the second portion 62.

The first portion 61 and the second portion 62 are transparent members. The third portion 63 has a function of scattering or reflecting the light incident on the first portion 61. The third portion 63 has a refractive index different from that of the first portion 61. In addition, diffusing components 63c for diffusing light may be included in the inside of the third portion 63. These diffusing components 63c change the travel direction of the light by reflection, refraction or the like with respect to the light traveling in the particle 60. The light diffusing function (light scattering function) of such diffusing components 63c may be imparted, for example, when a material having a different refractive index from the material forming the main portions of the particle 60 constitutes the diffusing components 63c, or when a material that can exert a reflection action on the light constitutes the diffusing components 63c. As the diffusing components 63c having a refractive index different from that of the base material of the third portion 63, resin beads, glass beads, a metal compound, a porous material containing a gas, and mere bubbles are exemplified.

The particle 60 is typically spherical in shape, a thin layer passing near the center thereof is the third portion 63, and the first portion 61 and the second portion 62 are in surface contact with the both surface (the first surface 63a and the second surface 63b) sides of the third portion 63. Note that the shape of the particle 60 is not necessarily an ideal sphere. Therefore, the shapes of the first portion 61, the third portion 63 and the second portion 62 also change according to the shape of the particle 60.

The thickness between the first surface 63a and the second surface 63b of the third portion 63 of the particle 60 is smaller than the maximum thickness in the normal direction of the first surface 63a of the first portion 61. The thickness between the first surface 63a and the second surface 63b of the third portion 63 is smaller than the maximum thickness in the normal direction of the second surface 63b of the third portion 63. For example, the first surface 63a and the second surface 63b are circular or elliptical, and the third portion 63 is in the shape of, for example, a circular plate, an elliptic plate, a cylindrical body, or an elliptic cylinder. In the initial state, the plane direction of the third portion 63 is arranged in a direction substantially orthogonal to the surface direction of the particle layer 55.

In the initial state in which no voltage is applied to the first and second electrodes 41, 42, the surface direction of the third portion 63 is arranged in a direction substantially orthogonal to the surface direction of the particle layer 55. Note that, in the initial state, arrangement of the surface direction of the third portion 63 in a direction substantially orthogonal to the surface direction of the particle layer 55 can be realized by, for example, adjusting the specific gravity of the first portion 61, the second portion 62, and the third portion 63 of the particle 60. Alternatively, in the initial state, a predetermined initial voltage may be applied to the first and second electrodes 41, 42 so that the surface direction of the third portion 63 of each particle 60 in the particle layer 55 is a direction substantially orthogonal to the surface direction of the particle layer 55.

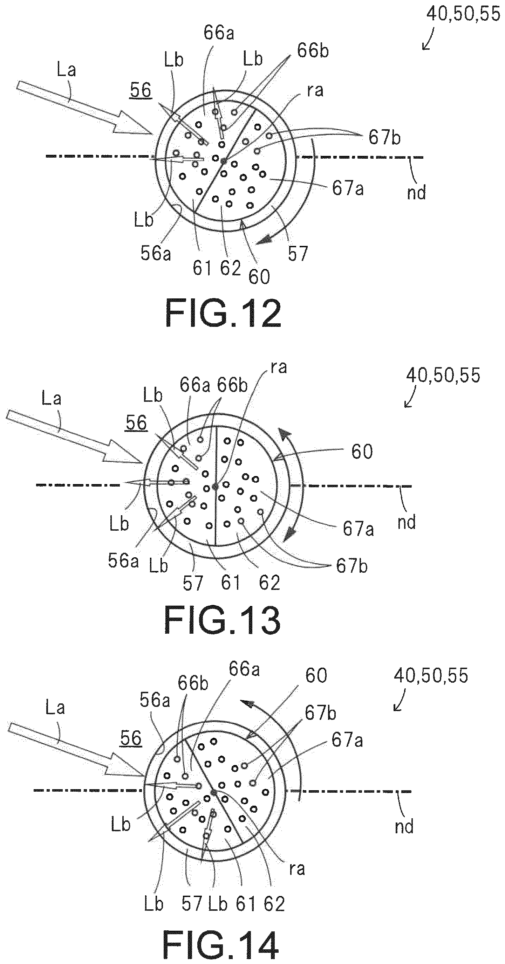

In the above drawings, the cross-sectional structure of the transmission screen 40 has been described, but the screen 40 of the present embodiment may be of a reflection type. FIGS. 12 to 14 are diagrams for explaining the principle of acting as the reflection screen 40 by making the diffusion direction of the particle 60 in the particle layer 55 different from those in FIGS. 8 to 10.

The first portion 61 and the second portion 62 may be of the same color, or one of the first portion 61 and the second portion 62 may be transparent. In the particle 60 shown in FIG. 8 and FIG. 12, the first portion 61 is formed transparent. The particle 60 shown in FIGS. 8 and 12 can change the traveling direction of the light incident on the particle 60 by reflection or refraction at the interface between the first portion 61 and the second portion 62, diffusion at the second portion 62, or reflection or refraction at the surface of the particle 60. The color of such a particle 60 is grasped as the color of the second portion 62 since the first portion 61 is transparent. Therefore, even if the orientation, posture, and position of the particle 60 change, the screen 40 has a certain color. Thereby, when an image is displayed, the color of the screen 40 is not perceived as changed. As a result, it is possible to effectively avoid deterioration of the image quality accompanying the color change of the screen 40.

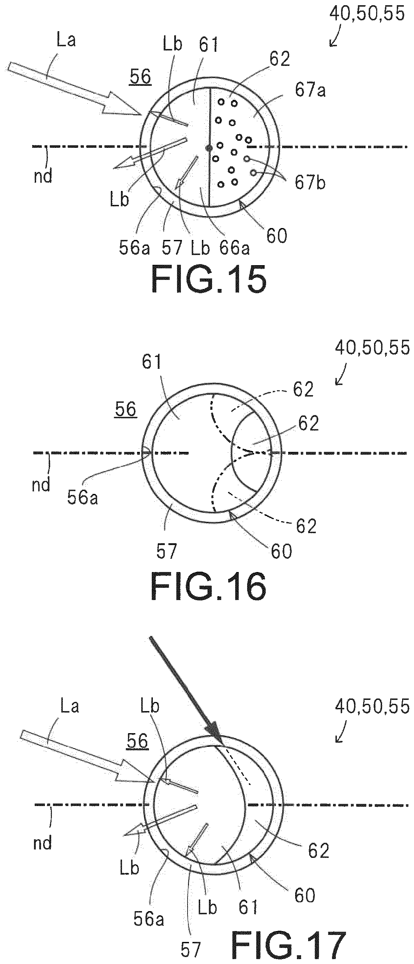

In the above-described embodiment, an example in which the first portion 61 and the second portion 62 have the same color is shown, but the present invention is not limited to this example. One of the first portion 61 and the second portion 62 may be transparent. In the particle 60 shown in FIG. 15, the first portion 61 is formed transparent. The particle 60 shown in FIG. 15 can change the traveling direction of the light incident on the particle 60 by reflection or refraction at the interface between the first portion 61 and the second portion 62, diffusion at the second portion 62, or reflection or refraction at the surface of the particle 60. The color of such a particle 60 is grasped as the color of the second portion 62 since the first portion 61 is transparent. Therefore, even if the orientation, posture, and position of the particle 60 change, the screen 40 has a certain color. Thereby, when an image is displayed, the color of the screen 40 is not perceived as changed. As a result, it is possible to effectively avoid deterioration of the image quality accompanying the color change of the screen 40.

In addition, as shown in FIG. 16, the first portion 61 and the second portion 62 of the particle 60 may be different in volume ratio. That is, the volume ratio of the first portion 61 in the particle 60 may be different from the volume ratio of the second portion 62 in the particle 60. In the particle 60 shown in FIG. 16, the volume ratio of the first portion 61 is larger than the volume ratio of the second portion 62. In the case of using such a particle 60, while the screen 40 is irradiated with light, it is easy to cover with the first portion 61 at least a part of the second portion 62 from the observer 15 side along a normal direction nd of the screen 40. When the second portion 62 moves to the position indicated by the two-dotted chain line in FIG. 16 according to the rotation operation of the particle 60, the first portion 61 can cover and hide the second portion 62 from the observer 15 side along the normal direction nd of the screen 40. Therefore, even when the first portion 61 and the second portion 62 are not exactly the same color, changes of the color of the screen 40 can be effectively made difficult to be perceived while the image is displayed while the particle 60 is moved.

Further, when the driving of the particle 60 is controlled to effectively make the color change of the screen 40 difficult to be perceived without being significantly affected by the color difference between the first portion 61 and the second portion 62, one of the first portion 61 and the second portion 62 may have a light absorbing function. In the example shown in FIG. 17, the first portion 61 has light diffusion property and the second portion 62 has light absorbing function. As an example, the light absorbing function of the second portion 62 can be expressed when the second portion 62 includes a light absorbing colorant, specifically, a pigment such as carbon black or titanium black. In the particle 60 shown in FIG. 17, light Lc incident from a direction different from image light La from the projector 20 can be absorbed by the second portion 62. The light absorbed by the second portion 62 can be, for example, ambient light from a lighting device present at the place where the display device 10 is installed. By selecting and absorbing the light Lc other than the image light La incident on the screen 40, it is possible to efficiently improve the contrast of the display image without impairing the brightness of the display image.

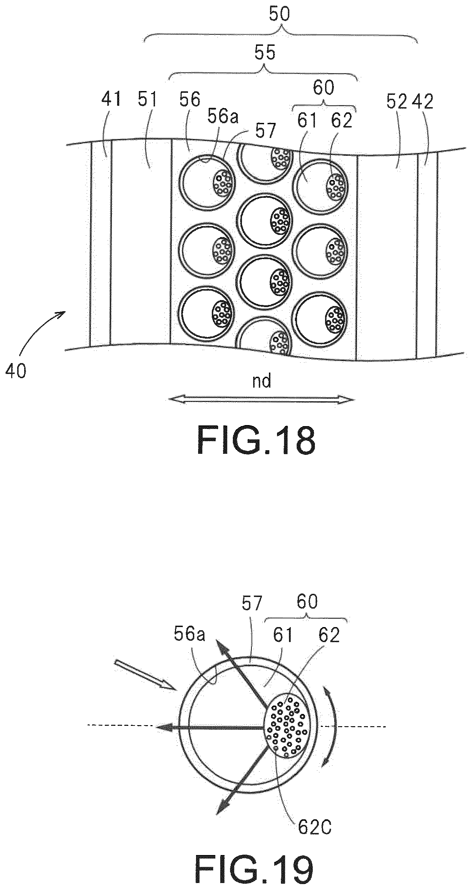

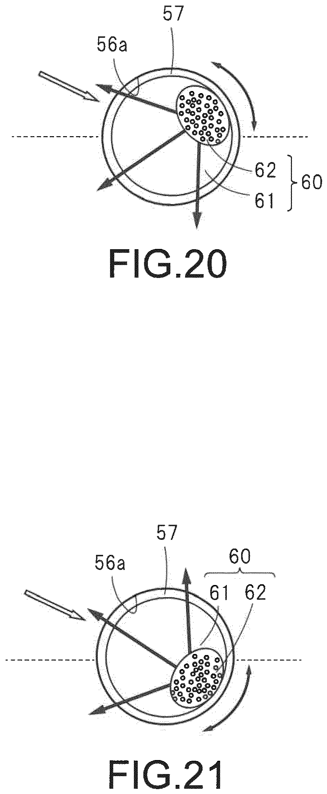

The volumes of the first portion 61 and the second portion 62 of the particle 60 may be different from each other. FIG. 18 shows an example in which the volume of the first portion 61 is larger than the volume of the second portion 62. In the case of FIG. 18, the second portion 62 has a shape close to a sphere or an elliptical sphere, and the surface of the second portion 62, that is, the interface with the first portion 61 is convex. Note that the particle 60 is not necessarily an ideal sphere, and the second portion 62 may have a shape slightly distorted from an ideal sphere or ellipsoid. The particle 60 shown in FIG. 18 rotates as shown in FIGS. 19 to 21. More specifically, the particle 60 rotates in the rotation direction of FIG. 20 and the rotation direction of FIG. 21 with FIG. 19 as a rotation center.

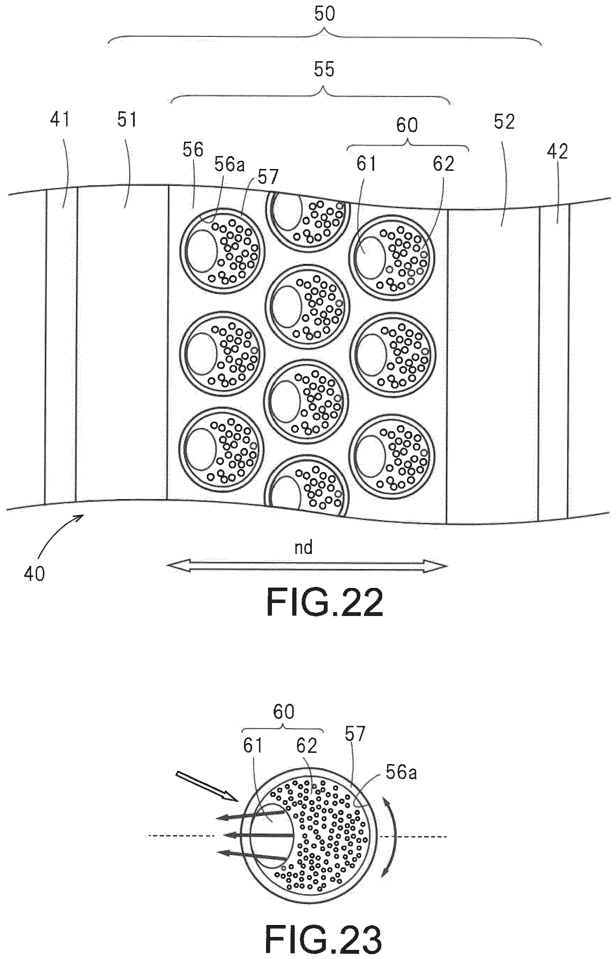

In addition, as shown in FIGS. 22 to 25, the particle 60 may have the first portion 61 and the second portion 62 having a larger volume than the first portion 61. The materials of the first portion 61 and the second portion 62 are similar to those in FIG. 18, the first portion 61 is a transparent member, and the second portion 62 has the function of scattering or reflecting light.

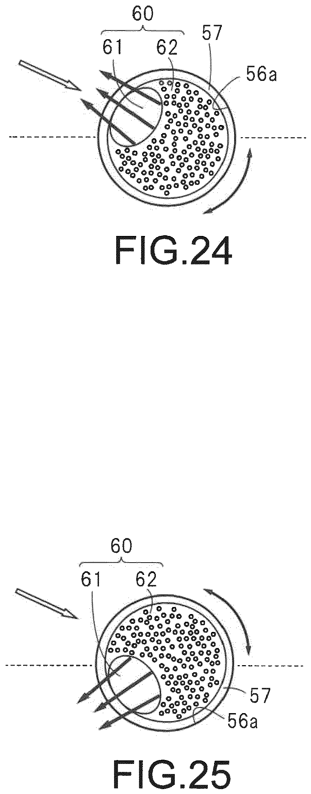

The interface between the first portion 61 and the second portion 62 of the particle 60 in FIGS. 22 to 25 is convex when viewed from the first portion 61 and concave when viewed from the second portion 62. The light incident on the second portion 62 from the first portion 61 travels in a converging direction. As a result, the screen 40 having the particle 60 according to the present embodiment can diffuse light in a narrow range. Therefore, diffused light can be gathered intensively to the observer 15 at a specific position on the front side of the screen 40, and from the observer 15's viewpoint, the screen 40 can be visually recognized with high contrast. FIG. 22 shows a cross-sectional view of the screen 40, and FIGS. 23 to 25 show examples in which the rotation angles of the particle 60 are different from each other. The particle 60 alternately rotates in the rotation direction of FIG. 24 and the rotation direction of FIG. 25 with FIG. 23 as a rotation center.

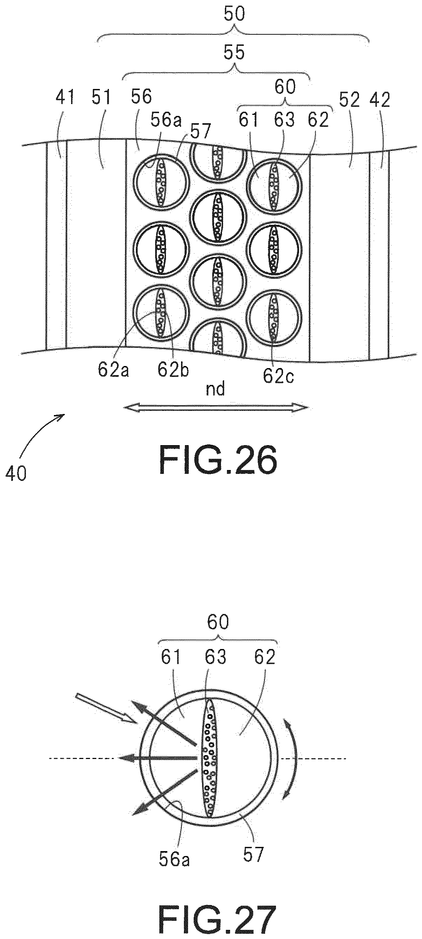

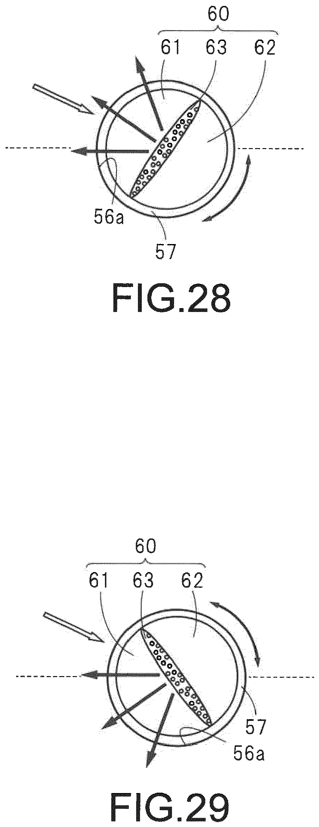

The particle 60 in the particle layer 55 of the reflection screen 40 may have a three-layer structure instead of a two-layer structure. FIG. 26 is a cross-sectional view of the reflection screen 40 having the particle 60 having a three-layer structure. FIGS. 27 to 29 show examples in which the rotation angles of the particle 60 are different from each other. The particle 60 alternately rotates in the rotation direction of FIG. 28 and the rotation direction of FIG. 29 with FIG. 27 as a rotation center.

In FIGS. 26 to 29, the particle 60 has a three-layer structure in which the first portion 61, the third portion 63, and the second portion 62 are arranged in this order, and the first portion 61 is arranged on the observer 15 side. The third portion 63 is in surface contact with the first portion 61 and controls incident light from the first portion 61. The second portion 62 is in surface contact with a second surface 63b opposite to a first surface 63a which is in surface contact with the first portion 61 of the third portion 63 and has a relative dielectric constant different from that of the first portion 61. In this manner, the third portion 63 is sandwiched between the first portion 61 and the second portion 62, and the third portion 63 is in surface contact with the first portion 61 and the second portion 62.

The first portion 61 and the second portion 62 are transparent members. The third portion 63 has a function of scattering or reflecting the light incident on the first portion 61. The third portion 63 has a refractive index different from that of the first portion 61. In addition, diffusing components 63c for diffusing light may be included in the inside of the third portion 63. These diffusing components 63c change the travel direction of the light by reflection, refraction or the like with respect to the light traveling in the particle 60. The light diffusing function (light scattering function) of such diffusing components 63c may be imparted, for example, when a material having a different refractive index from the material forming the main portions of the particle 60 constitutes the diffusing components 63c, or when a material that can exert a reflection action on the light constitutes the diffusing components 63c. As the diffusing components 63c having a refractive index different from that of the base material of the third portion 63, resin beads, glass beads, a metal compound, a porous material containing a gas, and mere bubbles are exemplified.

The particle 60 is typically spherical in shape, a thin layer passing near the center thereof is the third portion 63, and the first portion 61 and the second portion 62 are in surface contact with the both surface (the first surface 63a and the second surface 63b) sides of the third portion 63. Note that the shape of the particle 60 is not necessarily an ideal sphere. Therefore, the shapes of the first portion 61, the third portion 63 and the second portion 62 also change according to the shape of the particle 60.

The thickness between the first surface 63a and the second surface 63b of the third portion 63 of the particle 60 is smaller than the maximum thickness in the normal direction of the first surface 63a of the first portion 61. The thickness between the first surface 63a and the second surface 63b of the third portion 63 is smaller than the maximum thickness in the normal direction of the second surface 63b of the third portion 63. For example, the first surface 63a and the second surface 63b are circular or elliptical, and the third portion 63 is in the shape of, for example, a circular plate, an elliptic plate, a cylindrical body, or an elliptic cylinder.

In the initial state in which no voltage is applied to the first and second electrodes 41, 42, the surface direction of the third portion 63 is arranged in a direction substantially parallel to the surface direction of the particle layer 55. Note that, in the initial state, arrangement of the surface direction of the third portion 63 in a direction substantially parallel to the surface direction of the particle layer 55 can be realized by, for example, adjusting the specific gravity of the first portion 61, the second portion 62, and the third portion 63 of the particle 60. Alternatively, in the initial state, a predetermined initial voltage may be applied to the first and second electrodes 41, 42 so that the surface direction of the third portion 63 of each particle 60 in the particle layer 55 is a direction substantially parallel to the surface direction of the particle layer 55.

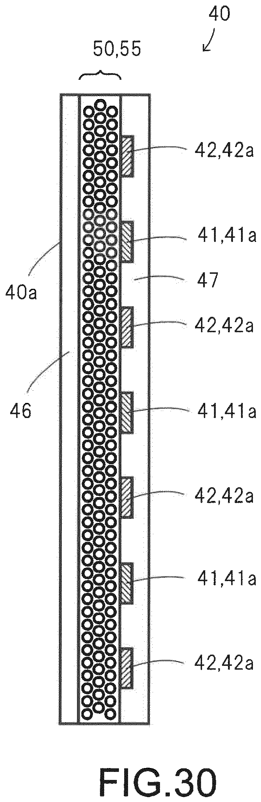

In each of the above-described screens 40, the example in which the first electrode 41 and the second electrode 42 are formed in a planar shape and arranged so as to sandwich the particle layer 55 is shown, but the present invention is not limited to this example. One or more of the first electrode 41 and the second electrode 42 may be formed in a stripe shape. For example, in the example of FIG. 30, both the first electrode 41 and the second electrode 42 are formed in a stripe shape. That is, the first electrode 41 has a plurality of linear electrode portions 41a linearly extending, and the plurality of linear electrode portions 41a are arranged in a direction orthogonal to the longitudinal direction thereof. As similar to the first electrode 41, the second electrode 42 also has a plurality of linear electrode portions 42a linearly extending, and the plurality of linear electrode portions 42a are arrayed in a direction orthogonal to the longitudinal direction thereof. In the example shown in FIG. 30, the plurality of linear electrode portions 41a forming the first electrode 41 and the plurality of linear electrode portions 42a forming the second electrode 42 are both arranged on the surface opposite to the observer of the particle sheet 50. The plurality of linear electrode portions 41a forming the first electrode 41 and the plurality of linear electrode portions 42a forming the second electrode 42 are alternately arrayed along the same array direction. By applying the voltage from the drive circuit 30 also by the first electrode 41 and the second electrode 42 shown in FIG. 30, it is possible to generate an electric field in the particle layer 55 of the particle sheet 50.

The transmission or reflection screen 40 described above may be laminated with various light control layers such as a Fresnel lens layer, a light diffusing layer, a light absorbing layer, a lens array, a black matrix, or the like, if necessary.

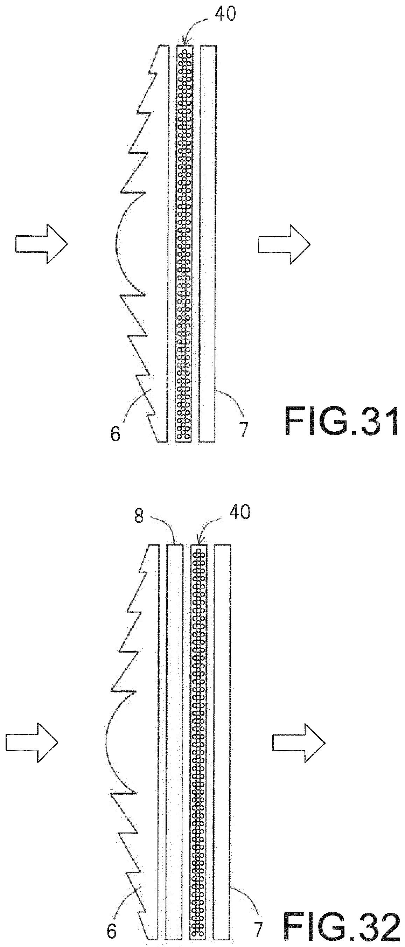

FIG. 31 is a view showing an example in which a Fresnel lens layer (light direction changing member) 6 is arranged on an incident surface side of the transmission screen 40, and the light diffusing layer 7 is arranged on an emission surface side of the screen 40. In the screen 40 of FIG. 31, the above-described various types of transmission screens 40 are applicable.

The Fresnel lens layer 6 is arranged on the side on which light from the projector 20 is incident. The Fresnel lens layer 6 deflects the light from the projector 20 into substantially parallel light. As a result, most of the light from the projector 20 can be made incident on the screen 40, and the light use efficiency is improved.

In addition, the light diffusing layer 7 diffuses the light that has passed through the screen 40. A plurality of particles 60 are contained in the particle layer 55 of the screen 40, and if there is no light diffusing layer 7, the particles 60 may be visually recognized by the observer 15 of the screen 40 due to the light passing through the gap of the particles 60. Therefore, when the light diffusing layer 7 is arranged on the emission surface side of the screen 40, the light passing through the screen 40 is diffused, and the possibility of the particles 60 is prevented from being visually recognized by the observer 15. In addition, by providing the light diffusing layer 7, speckles are more difficult to be visually recognized.

FIG. 32 shows an example in which a light diffusing layer 8 is also arranged between the Fresnel lens layer 6 and the screen 40 in addition to the configuration of FIG. 31. By providing the light diffusing layer 8 also on the incident surface side of the screen 40, the proportion of light passing between the plurality of particles 60 in the particle layer 55 can be reduced, and speckles are more difficult to be visually recognized.

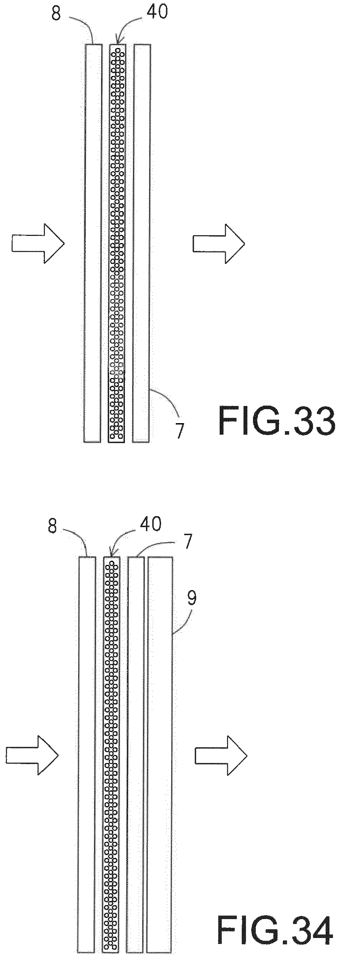

FIG. 33 shows an example in which the Fresnel lens layer 6 is omitted from FIG. 32. In the case of FIG. 33, there is a possibility that part of the light incident on the light diffusing layer 8 on the incident surface side may not be incident on the screen 40. However, when the light diffusing layer 7 and the screen 40 are arranged close to each other, most of light incident on the light diffusing layer 8 can be incident on the screen 40. In addition, omitting the Fresnel lens layer 6 can reduce member costs.

FIG. 34 shows an example in which the light absorbing layer 9 is arranged close to the light diffusing layer 7 on the emission surface side of the screen 40. When the light absorbing layer 9 is provided, reflection of external light can be prevented and the contrast of the screen 40 can be improved. In addition, when ultraviolet light can be absorbed by the light absorbing layer 9, ultraviolet light does not penetrate the light diffusing layer 7 and enter the screen 40, so that deterioration of the screen 40 can be prevented and lifetime can be improved.

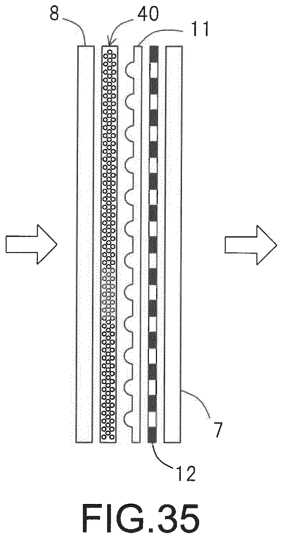

FIG. 35 is shows an example in which the lens array layer 11 and the black matrix layer 12 are arranged between the emission surface of the screen 40 and the light diffusing layer 7, in addition to the configuration of FIG. 33.

The lens array layer 11 has a plurality of microlenses arranged along the surface direction. The light emitted from the screen 40 and incident on the lens array layer 11 is refracted by each microlens of the lens array layer 11, passes through the black matrix layer 12, is diffused by the light diffusing layer 7, and is emitted. On the other hand, the external light incident on the light diffusing layer 7 on the emission surface side is absorbed by the black matrix layer 12, and the ratio of external light reflected toward the observer 15 can be reduced.

As described above, in the present embodiment, since the first optical system 1 including the half mirror 3, the concave mirror 4, or the like is arranged on the rear side of the optical axis of the screen 40, the observer 15 can observe the real image 16a or the virtual image 16b that is enlarged image of the image projected on the screen 40. In the present embodiment, while the screen 40 is irradiated with light, an electric field is generated in the particle layer 55 to move the particle 60, so that speckle can be effectively made inconspicuous. Therefore, speckles are not visually recognized also in the real image 16a or the virtual image 16b observed by the observer 15.

Further, by arranging the Fresnel lens layer 6 on the incident surface side of the screen 40 according to the present embodiment, more light from the projector 20 can be guided to the screen 40, the utilization efficiency of light from the projector 20 is improved, and the contrast can be improved.

Arranging the light diffusing layer 7 on at least one main surface side of the screen 40 according to the present embodiment can eliminate the possibility that the particle 60 in the particle layer 55 of the screen 40 is observed by the observer 15.

In addition, by arranging the light absorbing layer 9 on at least one main surface side of the screen 40 according to the present embodiment, external light can be absorbed at the light absorbing layer 9, no reflection of external light occurs, and contrast is improved.

Alternatively, arranging the lens array layer 11 and the black matrix layer 12 on at least one main surface side of the screen 40 according to the present embodiment also improve external light reflection and contrast. Alternatively, a similar effect can be achieved by using a louver layer using a light absorbing material.

The display device according to the aspect of the present disclosure can be applied to, for example, a head-up display device for a vehicle. In addition, the display device can be applied as various display devices of other than a head-up display device for a vehicle.

Aspects of the present disclosure are not limited to the individual embodiments described above, but include various modifications that can be conceived by those skilled in the art, and the effects of the present disclosure are not limited to the contents described above. That is, various additions, modifications and partial deletions are possible without departing from the conceptual idea and gist of the present disclosure derived from the contents defined in the claims and their equivalents.

### Reference Signs List

- ra: Rotation axis
- 1: First optical system
- 3: Half mirror
- 5: Second optical system
- 6: Fresnel lens layer
- 7, 8: Light diffusing layer
- 9: Light absorbing layer
- 10: Display device
- 11: Lens array layer
- 12: Black matrix layer
- 15: Observer
- 16a: Real image
- 16b: Virtual image
- 20: Projector
- 21: Coherent light source
- 22: Scanning device
- 23: Reflection mirror
- 30: Drive circuit
- 40: Screen
- 40a, 40b: Display side surface
- 41: First electrode
- 42: Second electrode
- 46: First cover layer
- 47: Second cover layer
- 50: Particle sheet
- 51: First substrate
- 52: Second substrate
- 55: Particle layer
- 56: Holding part
- 56a: Cavity
- 57: Solvent
- 60: Particle
- 61: First portion
- 62: Second portion
- 63: Third portion
- 66a: First main portion
- 66b: First diffusing component
- 67a: Second main portion
- 67b: Second diffusing component

## Claims

1. A display device comprising:
a projector that emits coherent light;
a screen on which the coherent light emitted from the projector is projected; and
a first optical system that guides transmitted light or diffused light of the screen to an observing direction of an observer and allows an observer to observe a real image or a virtual image of an image projected on the screen,
wherein the screen comprises
a plurality of particles each comprising a first portion and a second portion,
a particle layer comprising the plurality of particles, and
an electrode that generates an electric field for driving the particles of the particle layer when a voltage is applied to the particle layer.

2. The display device according to claim 1, wherein the first optical system comprises a half mirror that partially transmits and reflects the transmitted light or the diffused light of the screen, and allows the observer to observe the virtual image of the image projected on the screen.

3. The display device according to claim 1, wherein the first optical system comprises a concave mirror that reflects the transmitted light or the diffused light of the screen, and allows the observer to observe the real image of the image projected on the screen.

4. The display device according to any one of claims 1 to 3,
wherein the screen is of a transmissive type,
the display device further comprises a second optical system arranged at a position between the screen and the first optical system where the coherent light transmitted through the screen from the projector is not directly incident, and
the first optical system guides the coherent light that has passed through the second optical system to an observing direction of the observer.

5. The display device according to any one of claims 1 to 4, wherein the screen comprises a light diffusing layer arranged close to the particle layer.

6. The display device according to claim 5, wherein the screen comprises a light direction changing member arranged close to a side opposite to a side on which the light diffusing layer of the particle layer is closely arranged to change a traveling direction of incident light.

7. The display device according to any one of claims 1 to 4, wherein the screen comprises two light diffusing layers arranged on both sides of the particle layer interposed between the two light diffusing layers.

8. The display device according to any one of claims 5 to 7, wherein the screen comprises a light absorbing layer that is arranged close to the light diffusing layer and absorbs light in a predetermined wavelength range.

9. The display device according to any one of claims 5 to 8, wherein the screen comprises:
a lens array arranged between the particle layer and the light diffusing layer; and
a black matrix arranged between the lens array and the light diffusing layer.
